# EUROPEAN PATENT APPLICATION

(11) **EP 4 694 482 A1**
(43) Date of publication of application: **11.02.2026**
(21) Application number: 23929502.5
(22) Date of filing: 31.03.2023
(51) Int. Cl.: H04W 72/23

(54) **CHANNEL TRANSMISSION METHOD, APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/085747
(87) International publication number: WO 2024/197919

(57) **Abstract**

The present disclosure provides a channel transmission method, an apparatus, and a storage medium. The method comprises: receiving resource set indication information sent by a base station, wherein the resource set indication information is used for indicating a resource set of a PUCCH; in response to determining that the PUCCH needs to be transmitted on a plurality of time units, and the plurality of time units correspond to at least two time unit types, determining at least one first time unit for transmission of the PUCCH from the plurality of time units; on the basis of the resource set and the time unit type of the first time units, determining resources occupied when the PUCCH is transmitted on each first time unit; and sending the PUCCH to the base station on the resource of each first time unit. The present disclosure improves the reliability of PUCCH transmission, reduces the scheduling complexity of the base station scheduling PUCCH transmission, effectively reduces the transmission delay, and improves the reliability of full-duplex communication.

## Description

### TECHNICAL FIELD

The present disclosure relates to the field of communication, and in particular, to a channel transmission method and apparatus, and a storage medium.

### BACKGROUND

Full-duplex solutions will be studied in a full-duplex enhancement project of Release 18 (Rel-18) in 3rd generation partnership project (3GPP). A network-side device can simultaneously perform data receipt and data transmission within one time unit.

However, when the terminal needs to transmit a physical uplink control channel (PUCCH) in multiple time units, and the multiple time units correspond to at least two types of time units, available uplink resources corresponding to the PUCCH in different types of time units may be different. For example, one type is a downlink time unit or a flexible time unit configured with an uplink subband, the terminal performs uplink transmission in this type of time unit by using a frequency-domain resource occupied by the uplink subband, and another type is an uplink time unit configured with no uplink subband or a flexible time configured with no uplink subband, the terminal may perform uplink transmission in this type of time unit by using a frequency-domain resource occupied by an uplink bandwidth part, and generally, a frequency-domain resource range occupied by the uplink subband is different from a frequency-domain resource range occupied by the uplink bandwidth part, so that available uplink resources of the PUCCH in the two types of time units are different, resulting in unclear terminal behavior.

### SUMMARY

To solve problems in the related arts, embodiments of the present disclosure provide a channel transmission method and apparatus, and a storage medium.

According to a first aspect of the embodiments of the present disclosure, a channel transmission method is provided, performed by a terminal, including:
receiving resource set indication information sent by a base station, where the resource set indication information indicates a resource set of a physical uplink control channel (PUCCH);
in response to determining that the PUCCH needs to be transmitted in multiple time units, and the multiple time units correspond to at least two types of time units, determining, from the multiple time units, one or more first time units for transmitting the PUCCH;
determining, based on the resource set and a time unit type of the first time units, a resource occupied when the PUCCH is transmitted in each of the first time units; and
sending the PUCCH to the base station on the resource in each of the first time units.

According to a second aspect of the embodiments of the present disclosure, a channel transmission method is provided, performed by a base station, including:
sending resource set indication information to a terminal, where the resource set indication information indicates a resource set of a physical uplink control channel (PUCCH);
in response to determining that the PUCCH needs to be transmitted in multiple time units by the terminal, and the multiple time units correspond to at least two types of time units, determining, from the multiple time units, one or more first time units for transmitting the PUCCH by the terminal;
determining, based on the resource set and a time unit type of the first time units, a resource occupied when the PUCCH is transmitted by the terminal in each of the first time units; and
receiving the PUCCH sent by the terminal on the resource in each of the first time units.

According to a third aspect of the embodiments of the present disclosure, a channel transmission apparatus is provided, applied to a terminal, including:
a first receiving module, configured to receive resource set indication information sent by a base station, where the resource set indication information indicates a resource set of a physical uplink control channel (PUCCH);
a first determining module, configured to, in response to determining that the PUCCH needs to be transmitted in multiple time units, and the multiple time units correspond to at least two types of time units, determine, from the multiple time units, one or more first time units for transmitting the PUCCH;
a second determining module, configured to determine, based on the resource set and a time unit type of the first time units, a resource occupied when the PUCCH is transmitted in each of the first time units; and
a first sending module, configured to send the PUCCH to the base station on the resource in each of the first time units.

According to a fourth aspect of the embodiments of the present disclosure, a channel transmission apparatus is provided, applied to a base station, including:
a second sending module, configured to send resource set indication information to a terminal, where the resource set indication information indicates a resource set of a physical uplink control channel (PUCCH);
a third determining module, configured to, in response to determining that the PUCCH needs to be transmitted in multiple time units by the terminal, and the multiple time units correspond to at least two types of time units, determine, from the multiple time units, one or more first time units for transmitting the PUCCH by the terminal;
a fourth determining module, configured to determine, based on the resource set and a time unit type of the first time units, a resource occupied when the PUCCH is transmitted by the terminal in each of the first time units; and
a second receiving module, configured to receive the PUCCH sent by the terminal on the resource in each of the first time units.

According to a fifth aspect of the embodiments of the present disclosure, a computer-readable storage medium is provided, storing a computer program, where the computer program is used for performing the channel transmission method of any one of the above terminal side.

According to a sixth aspect of the embodiments of the present disclosure, a computer-readable storage medium is provided, storing a computer program, where the computer program is used for performing the channel transmission method of any one of the above base station side.

According to a seventh aspect of the embodiments of the present disclosure, a channel transmission device is provided, including:
one or more processors;
a memory for storing a processor-executable instruction;
where the processor is configured to perform the channel transmission method according to any one of the above terminal side.

According to an eighth aspect of the embodiments of the present disclosure, a channel transmission device is provided, including:
one or more processors;
a memory for storing a processor-executable instruction;
where the processor is configured to perform the channel transmission method according to any one of the above base station side.

The technical solutions provided by the embodiments of the present disclosure may include following beneficial effects.

In the present disclosure, the transmission resources occupied when the terminal transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication.

It shall be noted that the above general description and the following detailed description are examples and explanatory only and are not restrictive of the present disclosure.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a schematic flowchart of a channel transmission method according to an example embodiment.
FIG. 2 is a schematic flowchart of another channel transmission method according to an example embodiment.
FIG. 3 is a schematic flowchart of another channel transmission method according to an example embodiment.
FIG. 4 is a schematic flowchart of another channel transmission method according to an example embodiment.
FIG. 5 is a schematic flowchart of another channel transmission method according to an example embodiment.
FIG. 6 is a schematic flowchart of another channel transmission method according to an example embodiment.
FIG. 7 is a schematic flowchart of another channel transmission method according to an example embodiment.
FIG. 8 is a schematic flowchart of another channel transmission method according to an example embodiment.
FIG. 9A is a schematic diagram of a slot structure according to an example embodiment.
FIG. 9B is a schematic diagram of a relationship between downlink BWP and uplink subband according to an example embodiment.
FIG. 10 is a schematic diagram of determining a time-frequency resource for transmitting PUCCH according to an example embodiment.
FIG. 11 is another schematic diagram of determining a time-frequency resource for transmitting PUCCH according to an example embodiment.
FIG. 12 is another schematic diagram of determining a time-frequency resource for transmitting PUCCH according to an example embodiment.
FIG. 13 is another schematic diagram of determining a time-frequency resource for transmitting PUCCH according to an example embodiment.
FIG. 14 is a block diagram of a channel transmission apparatus according to an example embodiment.
FIG. 15 is a block diagram of another channel transmission apparatus according to an example embodiment.
FIG. 16 is a schematic structural diagram of a channel transmission device according to an example embodiment.
FIG. 17 is a schematic structural diagram of another channel transmission device according to an example embodiment.

### DETAILED DESCRIPTION

Example embodiments will be described in detail herein, examples of which are illustrated in the accompanying drawings. When following description refers to the drawings, unless otherwise indicated, same numerals in different drawings indicate same or similar elements. The implementations set forth in the following description of example embodiments do not represent all implementations consistent with the present disclosure. Instead, they are merely examples of apparatuses and methods consistent with aspects related to the present disclosure as recited in the appended claims.

The terminology used herein is for the purpose of describing particular embodiments only and is not intended to be limiting of the disclosure. The singular forms "a", "said" and "the" used in the present disclosure and the appended claims are also intended to include plural forms, unless the context clearly indicates other meanings. It will also be understood that the term "and/or" as used herein refers to and encompasses any and all possible combinations of at least one of the associated listed items.

It should be understood that although the terms first, second, third, etc. may be used in the present disclosure to describe various information, the information should not be limited to these terms. These terms are only used to distinguish a same type of information from each other. For example, without departing from the scope of the present disclosure, "first message" may also be referred to as "second message", and similarly, "second message" may also be referred to as "first message". Depending on the context, the word "if" as used herein may be interpreted as "when" or "upon" or "in response to determining".

In a SBFD (SubBand Frequency Duplex) mode, a carrier of time division duplex (TDD) may be divided into multiple subbands to support simultaneous transmission and reception in a same time unit (e.g., slot).

A full-duplex terminal may perform uplink transmission on an uplink subband (UL subband) located in a downlink slot (DL slot). However, according to the agreement, the base station does not expect the terminal to transmit the PUCCH in the DL slot, so the terminal can only transmit the PUCCH in the UL slot. Therefore, a gain of the full-duplex technology in latency reduction and reliability is limited, and scheduling flexibility of a network is also limited.

In addition, available uplink resources in different types of time units such as slots or symbols are different. For example, for a UL symbol or a UL slot, all uplink resource blocks (RB) included in a UL BWP in an active state may be used for PUCCH transmission, and for a subband full duplex (SBFD) time unit, for example, for a SBFD symbol or a SBFD slot, only a UL RB included in a UL subband may be used for PUCCH transmission. Generally, a frequency-domain resource range occupied by the UL subband is different from an uplink bandwidth part (Bandwidth Part, BWP). Based on this, if the terminal needs to transmit the PUCCH in the above-mentioned two types of time units, occupied frequency-domain resources may be different.

In the present disclosure, the base station may configure available PUCCH resources for the terminal through system information, such as a SystemInformationBlock1 (SIB1) or a terminal-specific Radio Resource Control (RRC) message. Specifically, following two parameters may be used for configuration:
PUCCH common configuration (PUCCH-ConfigCommon);
PUCCH configuration (PUCCH-Config).

The terminal determines, based on the configuration parameter in the above-mentioned messages, a resource set that can be used for PUCCH transmission in each uplink BWP. Further, the base station indicates, by using dynamic signaling such as downlink control information (DCI) or an RRC message, a time-frequency resource occupied by the terminal to transmit the PUCCH in a specified UL slot or flexible slot.

According to the agreement, the PUCCH can only be transmitted in the uplink BWP in the active state. That is, the SBFD terminal can only send the PUCCH on the PUCCH resource in the legacy uplink time unit, which will bring following problems.

Hybrid automatic repeat request acknowledgement (HARQ-ACK) feedback information cannot be transmitted in time, thereby limiting a gain of latency in the SBFD technology.

The base station must avoid scheduling the PUCCH resources of the SBFD terminal on the DL slot during scheduling, thereby increasing scheduling complexity.

The terminal cannot repeatedly transmit the PUCCH by using the UL subband, thereby affecting reliability and a transmission latency of the PUCCH.

On the other hand, if only unified PUCCH resource configuration and indication conditions are considered, that is, different numbers of available uplink resources in different types of time units are not considered, for the full-duplex technology, the terminal may perform uplink transmission in the DL slot, but only the frequency-domain resources in the UL subband may be used for uplink transmission. Since the frequency-domain resource range occupied by the UL subband is generally smaller than the frequency-domain resource range occupied by the uplink BWP, it is necessary to consider how to allocate frequency-domain resources for the PUCCH when the PUCCH transmission spans different time-domain resource types.

In order to solve the above technical problems, the present disclosure provides a channel transmission method and apparatus, and a storage medium, which can clarify the transmission resources occupied by the terminal when transmitting the PUCCH in different types of time units, ensure that the terminal and the base station have consistent understanding of the transmission resources of the PUCCH, improve the reliability of the PUCCH transmission, reduce the scheduling complexity of the PUCCH transmission scheduled by the base station, effectively reduce the transmission latency, and improve the reliability of full-duplex communication.

The following describes a channel transmission method provided in the present disclosure from a terminal side.

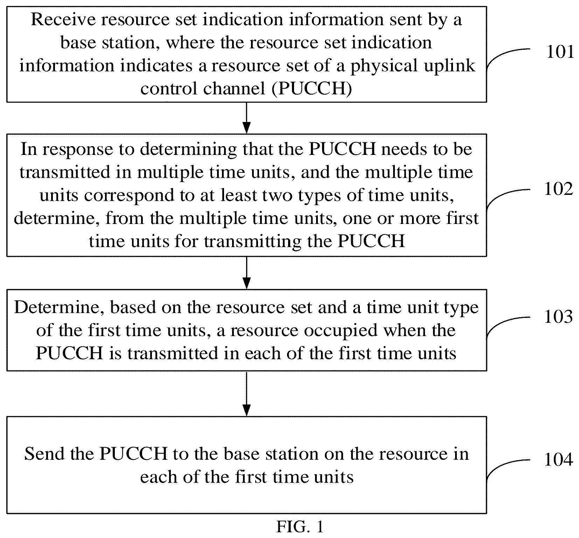

An embodiment of the present disclosure provides a channel transmission method, as shown in FIG. 1, FIG. 1 is a flowchart of a channel transmission method according to an embodiment, which may be performed by a terminal, and the method may include following steps 101-104.

In step 101, receiving resource set indication information sent by a base station, where the resource set indication information indicates a resource set of a physical uplink control channel (PUCCH).

In an embodiment of the present disclosure, the terminal may receive the resource set indication information sent by the base station through system information or a UE-specific RRC message, and the terminal determines the resource set of the PUCCH configured by the base station based on a PUCCH-ConfigCommon parameter in the system information or a PUCCH-Config parameter in the RRC message.

The resources of the PUCCH included in the resource set configured by the base station may include, but are not limited to, available time-domain resources and/or available frequency-domain resources of the PUCCH, and the number of resources of the PUCCH included in the resource set may be one or more, which is not limited in the present disclosure.

In step 102, in response to determining that the PUCCH needs to be transmitted in multiple time units, and the multiple time units correspond to at least two types of time units, determining, from the multiple time units, one or more first time units for transmitting the PUCCH.

In an embodiments of the present disclosure, the terminal may determine, based on configuration or indication of the base station, for example, based on downlink control information or a radio resource control message sent by the base station, that the PUCCH needs to be transmitted in multiple time units.

In an embodiment of the present disclosure, the at least two types of time units may include: a first type, configured with an uplink subband, a transmission direction thereof being downlink or flexible; and a second type, configured with no uplink subband, a transmission direction thereof being uplink or flexible.

For example, the first type may be defined as a subband full duplex (SBFD) time unit, and the SBFD time unit may take a unit of orthogonal frequency division multiplexing (OFDM) symbol, a span, a slot etc., which is not limited in the present disclosure. One span includes multiple consecutive symbols.

The SBFD time unit may be a downlink time unit configured with an uplink subband, or may be a flexible time unit configured with an uplink subband.

For example, the second type may be defined as a non-subband full duplex (non-SBFD) time unit. The non-SBFD time unit may take a unit of OFDM symbol, span, slot, etc., which is not limited in the present disclosure. The second type may be a time unit in which a frequency-domain resource occupied by the uplink BWP can be used.

In an example, the non-SBFD time unit is an uplink time unit configured with no uplink subband, although no uplink subband is configured in the uplink time unit, the uplink BWP configured by the base station is located in the uplink time unit, and therefore, in the uplink time unit configured with no uplink subband, the terminal may perform uplink transmission by using a frequency-domain resource included in the uplink BWP.

In another example, the non-SBFD time unit may be a flexible time unit for which no uplink subband is configured. The transmission direction of the flexible time unit may be configured again by the base station according to a scheduling situation, and therefore, the base station may configure the transmission direction of the flexible time unit as uplink according to the scheduling, so that the terminal may perform uplink transmission on the flexible time unit configured with no uplink subband by using the frequency-domain resource included in the uplink BWP.

In a possible implementation, the terminal may determine time units of the first type from the multiple time units as the first time units for transmitting the PUCCH.

In another possible implementation, the terminal may determine time units of the second type from the multiple time units as the first time units for transmitting the PUCCH.

In another possible implementation, the terminal may determine time units of the first type and the second type from the multiple time units as the first time units for transmitting the PUCCH.

A manner of determining the first time units is described in subsequent embodiments, which will not be described for the moment.

In step 103, determining, based on the resource set and a time unit type of the first time units, a resource occupied when the PUCCH is transmitted in each of the first time units.

In an embodiment of the present disclosure, the terminal may determine the resources occupied for transmitting the PUCCH in each first time unit based on the resource set of the PUCCH configured by the base station and the time unit type of the first time unit for transmitting the PUCCH. The determined resource occupied when the PUCCH is transmitted in each first time unit includes but is not limited to a time-domain resource and a frequency-domain resource.

For example, the first time unit takes "slot" as a unit, and the terminal may determine a symbol location and a frequency-domain location for transmitting the PUCCH in each slot.

In a possible implementation, the first time unit is a time unit of the first type, that is, the first time unit is a SBFD time unit, and the terminal may determine that the resource occupied when the PUCCH is transmitted in the first time unit is within the frequency-domain resource range occupied by the uplink subband in frequency-domain.

In another possible implementation, the first time unit is a time unit of the second type, that is, the first time unit is a non-SBFD time unit, and the terminal may determine that the resource occupied when the PUCCH is transmitted in the first time unit is within the frequency-domain resource range occupied by the BWP in frequency-domain.

In step 104, sending the PUCCH to the base station on the resource in each of the first time units.

In an embodiment of the present disclosure, the terminal may send the PUCCH to the base station in each first time unit by using the time-domain resource and/or the frequency-domain resource determined in step 103.

In the above embodiment, the transmission resources occupied when the terminal transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication.

In some optional embodiments, when configuring the resource set of the PUCCH, the base station may not distinguish the type of time units, that is, the base station uniformly configures the resource set of the PUCCH for time units of the first type and time units of the second type, and further, the base station may separately instruct the terminal to perform PUCCH transmission for different types of time units.

In an embodiment of the present disclosure, if the terminal needs to periodically transmit the PUCCH, the resource for transmitting the PUCCH may be determined in a following manner.

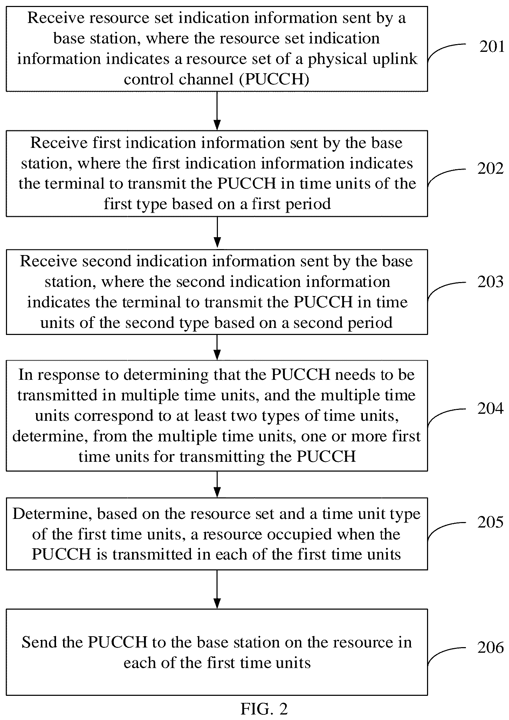

Referring to FIG. 2, FIG. 2 is a flowchart of a channel transmission method according to an embodiment, which may be performed by a terminal, and the method may include following steps 201-206.

In step 201, receiving resource set indication information sent by a base station, where the resource set indication information indicates a resource set of a physical uplink control channel (PUCCH).

In an embodiment of the present disclosure, the terminal may receive the resource set indication information sent by the base station through system information or a UE-specific RRC message, and the terminal determines the resource set of the PUCCH configured by the base station based on a PUCCH-ConfigCommon parameter in the system information or a PUCCH-Config parameter in the RRC message.

The resource set includes a first resource set configured by the base station for the terminal based on an uplink bandwidth part (BWP).

In an embodiment of the present disclosure, the first resource set may include one or more first resources that can be used by the terminal to perform PUCCH transmission, the first resource may include but is not limited to a time-domain resource and/or a frequency-domain resource, and the number of first resources is not limited in the present disclosure.

In step 202, receiving first indication information sent by the base station, where the first indication information indicates the terminal to transmit the PUCCH in time units of the first type based on a first period.

In an embodiment of the present disclosure, the base station may send the first indication information to the terminal when the terminal is required to periodically transmit the PUCCH in time units of the first type. After receiving the first indication information, the terminal may transmit the PUCCH in the time units of the first type based on the first period.

It should be noted here that the PUCCHs transmitted by the terminal based on the first period may be different or same, depending on uplink scheduling of the terminal itself, which is not limited in the present disclosure.

In step 203, receiving second indication information sent by the base station, where the second indication information indicates the terminal to transmit the PUCCH in time units of the second type based on a second period.

In an embodiment of the present disclosure, the base station may send the second indication information to the terminal when the terminal is required to transmit the PUCCH in time units of the second type. After receiving the second indication information, the terminal may transmit the PUCCH in the time units of the second type based on the second period.

The PUCCHs transmitted by the terminal based on the second period may be different or same, which is not limited in the present disclosure.

In a possible implementation, period durations of the second period and the first period may be same or different, which is not limited in the present disclosure.

In another possible implementation, offsets of the second period and the first period may be same or different.

The offset is the number of time units between a first one of time units for sending the PUCCH and a time unit with an index value being 0.

For example, if the offset corresponding to the first period is 0, the terminal transmits the PUCCH in slot #0 in a first one of first periods, and a duration of the first period is 4 slots, and the terminal transmits the PUCCH in slot #4 in a second one of first periods.

For another example, if the offset corresponding to the second period is 4, the terminal transmits the PUCCH in slot #4 in a first one of second periods, and a duration of the second period is 5 slots, the terminal transmits the PUCCH in slot #9 in a second one of second periods.

In an embodiment of the present disclosure, both step 202 and step 203 may be performed, and an execution order is not limited, step 202 may be performed before step 203, or step 203 may be performed before step 202, or steps 202 and 203 may be performed synchronously, for example, the base station synchronously sends the first indication information and the second indication information to the terminal through a same message (DCI or RRC message).

Certainly, one of step 202 and step 203 may alternatively be performed. That is, only step 202 or only step 203 is performed.

In step 204, in response to determining that the PUCCH needs to be transmitted in multiple time units, and the multiple time units correspond to at least two types of time units, determining, from the multiple time units, one or more first time units for transmitting the PUCCH.

In an embodiments of the present disclosure, the terminal may determine, based on configuration or indication of the base station, for example, based on downlink control information or a radio resource control message sent by the base station, that the PUCCH needs to be transmitted in multiple time units.

In a possible implementation, in response to receiving the first indication information, the terminal may determine time units of the first type from the multiple time units as the first time units based on the first period indicated by the first indication information.

For example, the first indication information indicates the terminal to transmit PUCCH #1 in the time units of the first type based on the first period, where the first period includes four slots; if slot #0 is a time unit of the first type, the terminal may determine slot #0 as the first time unit for transmitting PUCCH #1; or if slot #4 is a time unit of the first type, the terminal determines slot #4 as the first time unit for transmitting PUCCH #1, and so on.

For another example, the first indication information indicates the terminal to transmit PUCCH #1 in the time units of the first type based on the first period, and the first indication information indicates that the first period includes four slots; if slot #0 is a time unit of the second type, the terminal does not determine slot #0 as the first time unit for transmitting PUCCH #1; or if slot #4 is a time unit of the second type, the terminal also does not determine slot #4 as the first time unit for transmitting PUCCH #1, and so on.

In another possible implementation, in response to receiving the second indication information, the terminal may determine the time units of the second type from the multiple time units as the first time unit based on the second period.

For example, the second indication information indicates the terminal to transmit the PUCCH #2 in the time unit of the second type based on the second period, and the second indication information indicates that the second period includes five slots; if the slot #0 is a time unit of the second type, the terminal may determine the slot #0 as the first time unit for transmitting the PUCCH #2; or if the slot #5 is a time unit of the second type, the terminal determines the slot #5 as the first time unit for transmitting the PUCCH #2, and so on.

For another example, the second indication information indicates that the second period includes five slots, and if slot #0 is a time unit of the first type, the terminal does not determine slot #0 as the first time unit for transmitting PUCCH #2; or if slot #5 is a time unit of the first type, the terminal also does not determine slot #5 as the first time unit for transmitting PUCCH #2, and so on.

In another possible implementation, in response to receiving the first indication information and the second indication information, the terminal may determine the time unit of the first type and the time unit of the second type from the multiple time units as the first time units.

For example, the first indication information indicates that the first period includes four slots, and the second indication information indicates that the second period includes five slots; if slot #0 is a time unit of the first type, the terminal may determine slot #0 as the first time unit for transmitting PUCCH #1; or if slot #0 is a time unit of the second type, the terminal may determine slot #0 as the first time unit for transmitting PUCCH #2.

If the slot #4 is a time unit of the first type, the terminal determines the slot #4 as the first time unit for transmitting the PUCCH #1, and if the slot #4 is a time unit of the second type, the terminal does not determine the slot#4 as the first time unit for transmitting the PUCCH #1.

If the slot #5 is a time unit of the second type, the terminal determines the slot #5 as the first time unit for transmitting the PUCCH #2, and if slot #5 is a time unit of the first type, the terminal does not determine the slot #5 as the first time unit for transmitting the PUCCH #2. And so on.

In step 205, determining, based on the resource set and a time unit type of the first time units, a resource occupied when the PUCCH is transmitted in each of the first time units.

In an embodiment of the present disclosure, the resource used by the terminal in each first time unit is from the first resource set, and the base station may send, to the terminal by using DCI or an RRC message, an identifier indicating a first resource used by the terminal in the first resource set.

In a possible implementation, when the first time unit is a time unit of the first type, that is, the first time unit is a SBFD time unit, the terminal may determine that the resource occupied when the PUCCH is transmitted in the first time unit includes the first resource that the base station indicates the terminal to use, and the first resource needs to be located in the frequency-domain resource range occupied by the uplink subband in frequency-domain. In this case, the base station ensures, through scheduling, that the first resource is located in the frequency-domain resource range occupied by the uplink subband in frequency-domain.

For example, the first time unit slot #0 is a SBFD time unit, the base station configures the first resource set, and the base station may indicate, by using DCI or an RRC message, the first resource used by the terminal. It is assumed that the first resource is indicated by using a PUCCH resource indicator (PRI) field of the DCI.

Assuming that a resource identifier being 1 indicates the first resource, and the resource #1 is located within the frequency-domain resource range occupied by the uplink subband, the terminal performs PUCCH transmission on the slot #0 by using the resource #1.

In another possible implementation, when the first time unit is a time unit of the second type, that is, the first time unit is a non-SBFD time unit, the terminal may determine that the resource occupied when the PUCCH is transmitted in the first time unit includes the first resource. In this case, the first resource may be located in a frequency-domain resource range occupied by the uplink BWP in frequency-domain.

For example, the first time unit slot #1 is a non-SBFD time unit, the first resource indicated by the base station to be used by the terminal has a resource identifier being 2, and the terminal may determine that the resource occupied when the PUCCH is transmitted in the slot #1 is the resource #2.

In step 206, sending the PUCCH to the base station on the resource in each of the first time units.

In an embodiment of the present disclosure, the terminal may send the PUCCH to the base station in each first time unit by using the resource determined in step 205.

In the above embodiments, the transmission resources occupied when the terminal periodically transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication.

In some optional embodiments, when configuring the resource set of the PUCCH, the base station may distinguish types of time units, that is, the base station separately configures corresponding resource sets of the PUCCH for the time unit of the first type and the time unit of the second type. Further, the base station may uniformly indicate the terminal to perform PUCCH transmission without distinguishing types of the time units.

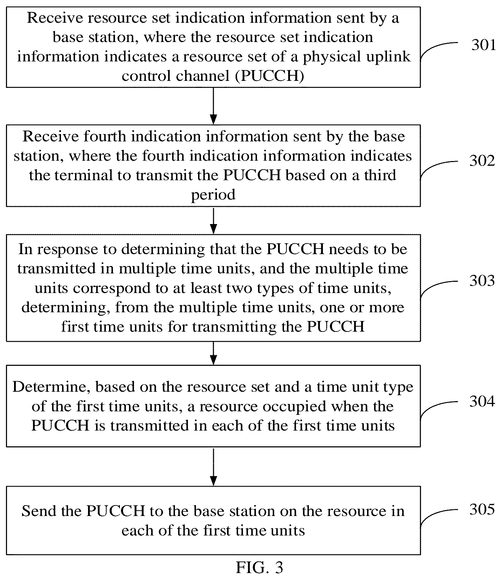

Also, for the periodically transmitted PUCCH, referring to FIG. 3, FIG. 3 is a flowchart of a channel transmission method according to an embodiment, which may be performed by a terminal, and the method may include following steps 301-305.

In step 301, receiving resource set indication information sent by a base station, where the resource set indication information indicates a resource set of a physical uplink control channel (PUCCH).

In an embodiment of the present disclosure, the terminal may receive the resource set indication information sent by the base station through system information or a UE-specific RRC message, and the terminal determines the resource set of the PUCCH configured by the base station based on a PUCCH-ConfigCommon parameter in the system information or a PUCCH-Config parameter in the RRC message.

The resource set may include: a second resource set corresponding to the first type; and a third resource set corresponding to the second type.

A number of second resources included in the second resource set may be one or more, and a number of third resources included in the third resource set may also be one or more, which is not limited in the present disclosure. The second resource may include a time-domain resource and/or a frequency-domain resource, and the third resource includes a time-domain resource and/or a frequency-domain resource.

In step 302, receiving fourth indication information sent by the base station, where the fourth indication information indicates the terminal to transmit the PUCCH based on a third period.

In an embodiment of the present disclosure, the base station may indicate, through the fourth indication information, the terminal to use the same third period duration to transmit the PUCCH in different types of time units. For example, the fourth indication information may be used to indicate the terminal to transmit the PUCCH by using period duration of four slots.

Alternatively, the fourth indication information may be used to indicate the terminal to transmit the PUCCHs in different types of time units by using different third period durations. For example, the fourth indication information may be used to indicate the terminal to transmit the PUCCH in time units of the first type by using period duration of four slots, and transmit the PUCCH in time units of the second type by using period duration of five slots.

The fourth indication information may indicate a same offset for time units of different types or indicate different offsets for time units of different types, which is not limited in the present disclosure.

In step 303, in response to determining that the PUCCH needs to be transmitted in multiple time units, and the multiple time units correspond to at least two types of time units, determining, from the multiple time units, one or more first time units for transmitting the PUCCH.

In a possible implementation, the terminal determines the first time unit based on a third period.

In this case, assuming that the third period includes four slots, the terminal may use slot #0, slot #4, ..., slot #8 as the first time units.

Assuming that the third period is related to types of time units, and different third periods corresponding to different types of time units, assuming that the third period corresponding to the time unit of the first type is a period 1 and includes four slots, and the third period corresponding to the time unit of the second type is a period 2 and includes five slots, the terminal uses slot #0, slot #4, slot #8,... as the first time units based on the period 1, and the terminal uses slot #0, slot #5, and slot #10 as the first time units based on the period 2.

In step 304, determining, based on the resource set and a time unit type of the first time units, a resource occupied when the PUCCH is transmitted in each of the first time units.

In an embodiment of the present disclosure, in response to determining that the first time units are time units of the first type, the terminal determines that the resource includes a second resource used by the terminal indicated by the base station through DCI or an RRC message, and in response to determining that the first time unit is a time unit of the second type, the terminal determines that the resource includes a third resource used by the terminal indicated by the base station through DCI or an RRC message.

The second resource is from a second resource set, and the third resource is from a third resource set.

For example, if the base station configures the second resource set and the third resource set, the base station indicates, by using DCI, that the resource identifier of the second resource is 1, and slot #4 is the time unit of the first type, the terminal determines that the frequency-domain resource occupied when the PUCCH is transmitted in slot #4 is resource #1.

For another example, if both the PUCCH #1 corresponding to the period 1 and the PUCCH #2 corresponding to the period 2 need to be transmitted in the slot #0, the terminal determines, based on a time unit type of slot #0, the PUCCH transmitted in the slot #0 and a resource occupied when the PUCCH is transmitted. Assuming that the slot #0 is a time unit of the second type, the terminal determines to transmit the PUCCH #2 in the slot #0, and a resource identifier of an occupied resource is 2, and the terminal uses the resource #2 in the third resource set as the resource that needs to be used by the PUCCH #2.

In step 305, sending the PUCCH to the base station on the resource in each of the first time units.

In an embodiment of the present disclosure, the terminal may send the PUCCH to the base station in each first time unit by using the resource determined in step 304.

In the above embodiments, the transmission resources occupied when the terminal periodically transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication.

The following then describes the channel transmission method provided in the present disclosure from a base station side.

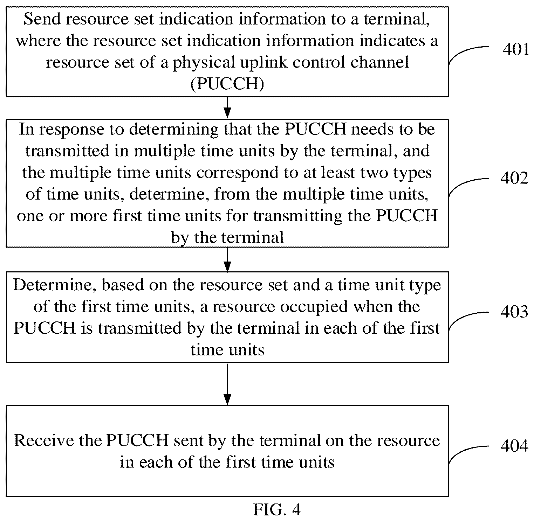

An embodiment of the present disclosure provides a channel transmission method, as shown in FIG. 4, FIG. 4 is a flowchart of a channel transmission method according to an embodiment, which may be performed by a base station, and the method may include following steps 401-404.

In step 401, sending resource set indication information to a terminal, where the resource set indication information indicates a resource set of a physical uplink control channel (PUCCH).

In an embodiment of the present disclosure, the base station may send the resource set indication information to the terminal through system information or a UE-specific RRC message, and configure the resource set of the PUCCH for the terminal through a PUCCH-ConfigCommon parameter in system information or a PUCCH-Config parameter in a RRC message.

The resources of the PUCCH included in the resource set configured by the base station may include, but are not limited to, available time-domain resources and/or available frequency-domain resources of the PUCCH, and the number of resources of the PUCCH included in the resource set may be one or more, which is not limited in the present disclosure.

In step 402, in response to determining that the PUCCH needs to be transmitted in multiple time units by the terminal, and the multiple time units correspond to at least two types of time units, determining, from the multiple time units, one or more first time units for transmitting the PUCCH by the terminal.

In an embodiment of the present disclosure, the base station determines that the terminal needs to transmit the PUCCH in multiple time units through configuration or indication, for example, the base station sends downlink control information or a radio resource control message to the terminal.

In an embodiment of the present disclosure, the at least two types of time units may include: a first type, configured with an uplink subband, a transmission direction thereof being downlink or flexible; and a second type, configured with no uplink subband, a transmission direction thereof being uplink or flexible.

For example, the first type may be defined as a SBFD time unit, and the SBFD time unit may be in units of OFDM symbol, span, slot, etc., which is not limited in the present disclosure. One span includes multiple consecutive symbols.

The SBFD time unit may be a downlink time unit configured with an uplink sub-band, or may be a flexible time unit configured with an uplink sub-band.

For example, the second type may be defined as a non-SBFD time unit. The non-SBFD time unit may take a unit of OFDM symbol, span, slot, etc., which is not limited in the present disclosure. The second type may be a time unit in which a frequency-domain resource occupied by the uplink BWP can be used.

In an example, the non-SBFD time unit is an uplink time unit configured with no uplink sub-band, although no uplink sub-band is configured in the uplink time unit, the uplink BWP configured by the base station is located in the uplink time unit, and therefore, in the uplink time unit configured with no uplink sub-band, the terminal may perform uplink transmission by using a frequency-domain resource included in the uplink BWP.

In another example, the non-SBFD time unit may be a flexible time unit for which no uplink sub-band is configured. The transmission direction of the flexible time unit may be configured again by the base station according to a scheduling situation, and therefore, the base station may configure the transmission direction of the flexible time unit as uplink according to the scheduling, so that the terminal may perform uplink transmission on the flexible time unit configured with no uplink sub-band by using the frequency-domain resource included in the uplink BWP.

In a possible implementation, the base station may determine time units of the first type from the multiple time units as the first time units for transmitting the PUCCH.

In another possible implementation, the base station may determine time units of the second type from the multiple time units as the first time units for transmitting the PUCCH.

In another possible implementation, the base station may determine time units of the first type and the second type from the multiple time units as the first time units for transmitting the PUCCH.

A manner of determining the first time units is described in subsequent embodiments, which will not be described for the moment.

In step 403, determining, based on the resource set and a time unit type of the first time units, a resource occupied when the PUCCH is transmitted by the terminal in each of the first time units.

In an embodiment of the present disclosure, the base station may determine the resources occupied for transmitting the PUCCH in each first time unit by the terminal based on the resource set of the PUCCH configured for the terminal and the time unit type of the first time unit for transmitting the PUCCH by the terminal. The determined resource occupied when the PUCCH is transmitted in each first time unit includes but is not limited to a time-domain resource and a frequency-domain resource.

In a possible implementation, the first time unit is a time unit of the first type, that is, the first time unit is a SBFD time unit, and the base station may determine that the resource occupied when the PUCCH is transmitted in the first time unit by the terminal is within the frequency-domain resource range occupied by the uplink subband in frequency-domain.

In another possible implementation, the first time unit is a time unit of the second type, that is, the first time unit is a non-SBFD time unit, and the base station may determine that the resource occupied when the PUCCH is transmitted in the first time unit by the terminal is within the frequency-domain resource range occupied by the BWP in frequency-domain.

In step 404, receiving the PUCCH sent by the terminal on the resource in each of the first time units.

In an embodiment of the present disclosure, the base station may receive the PUCCH transmitted by the terminal on the time-domain resource and/or the frequency-domain resource determined on each first time unit.

In the above embodiments, the transmission resources occupied when the terminal transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication.

In some optional embodiments, when configuring the resource set of the PUCCH, the base station may not distinguish the type of time units, that is, the base station uniformly configures the resource set of the PUCCH for time units of the first type and time units of the second type, and further, the base station may separately instruct the terminal to perform PUCCH transmission for different types of time units.

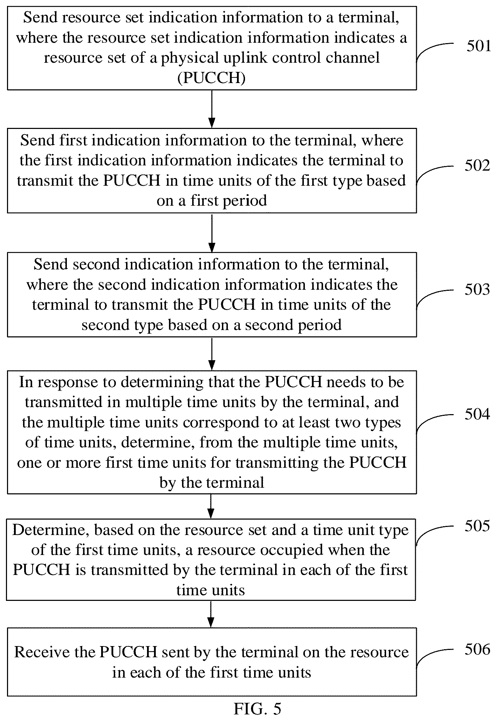

For a periodically transmitted PUCCH, referring to FIG. 5, FIG. 5 is a flowchart of a channel transmission method according to an embodiment, which may be performed by a base station, and the method may include following steps 501-506.

In step 501, sending resource set indication information to a terminal, where the resource set indication information indicates a resource set of a physical uplink control channel (PUCCH).

In an embodiment of the present disclosure, the base station may send the resource set indication information to the terminal through system information or a UE-specific RRC message, and configure the resource set of the PUCCH for the terminal through a PUCCH-ConfigCommon parameter in system information or a PUCCH-Config parameter in a RRC message.

The resource set includes a first resource set configured by the base station for the terminal based on an uplink bandwidth part (BWP).

In an embodiment of the present disclosure, the first resource set may include one or more first resources that can be used by the terminal to perform PUCCH transmission, the first resource may include but is not limited to a time-domain resource and/or a frequency-domain resource, and the number of first resources is not limited in the present disclosure.

In step 502, sending first indication information to the terminal, where the first indication information indicates the terminal to transmit the PUCCH in time units of the first type based on a first period.

In an embodiment of the present disclosure, the base station may send the first indication information to the terminal when the terminal is required to periodically transmit the PUCCH in time units of the first type, so that the terminal can transmit the PUCCH in the time units of the first type according to the first period.

It should be noted here that the PUCCHs transmitted by the terminal based on the first period may be different or same, depending on uplink scheduling of the terminal itself, which is not limited in the present disclosure.

In step 503, sending second indication information to the terminal, where the second indication information indicates the terminal to transmit the PUCCH in time units of the second type based on a second period.

In an embodiment of the present disclosure, the base station may send the second indication information to the terminal when the terminal is required to periodically transmit the PUCCH in time units of the second type, so that the terminal can transmit the PUCCH in the time units of the second type according to the second period.

In a possible implementation, the second period and the first period may be same or different, which is not limited in the present disclosure.

In another possible implementation, offsets of the second period and the first period may be same or different.

In an embodiment of the present disclosure, both step 502 and step 503 may be performed, and the execution order is not limited, step 502 may be performed before step 503, or step 503 may be performed before step 502, or steps 502 and 503 may be performed synchronously, for example, the base station synchronously sends the first indication information and the second indication information to the terminal through the same message.

Certainly, one of step 502 and step 503 may alternatively be performed. That is, only step 502 or only step 503 is performed.

In step 504, in response to determining that the PUCCH needs to be transmitted in multiple time units by the terminal, and the multiple time units correspond to at least two types of time units, determining, from the multiple time units, one or more first time units for transmitting the PUCCH by the terminal.

In a possible implementation, if the base station sends the first indication information, the base station may determine the time unit of the first type in the multiple time units as the first time unit based on a first period indicated by the first indication information.

For example, the first indication information indicates the terminal to transmit PUCCH #1 in the time units of the first type based on the first period, where the first period includes four slots; if slot #0 is a time unit of the first type, the base station may determine slot #0 as the first time unit for transmitting PUCCH #1; or if slot #4 is a time unit of the first type, the base station determines slot #4 as the first time unit for transmitting PUCCH #1, and so on.

For another example, the first indication information indicates the terminal to transmit PUCCH #1 in the time units of the first type based on the first period, and the first indication information indicates that the first period includes four slots; if slot #0 is a time unit of the second type, the base station does not determine slot #0 as the first time unit for transmitting PUCCH #1; or if slot #4 is a time unit of the second type, the base station also does not determine slot #4 as the first time unit for transmitting PUCCH #1, and so on.

In another possible implementation, if the base station sends the second indication information, the base station may determine the time unit of the second type in the multiple time units as the first time unit based on the second period.

For example, the second indication information indicates the terminal to transmit the PUCCH #2 in the time unit of the second type based on the second period, and the second indication information indicates that the second period includes five slots; if the slot #0 is a time unit of the second type, the base station may determine the slot #0 as the first time unit for transmitting the PUCCH #2; or if the slot #5 is a time unit of the second type, the base station determines the slot #5 as the first time unit for transmitting the PUCCH #2, and so on.

For another example, the second indication information indicates that the second period includes five slots, and if slot #0 is a time unit of the first type, the base station does not determine slot #0 as the first time unit for transmitting PUCCH #2; or if slot #5 is a time unit of the first type, the base station also does not determine slot #5 as the first time unit for transmitting PUCCH #2, and so on.

In another possible implementation, if the base station sends the first indication information and the second indication information, the base station may determine the time unit of the first type and the time unit of the second type in the multiple time units as the first time units.

For example, the first indication information indicates that the first period includes four slots, and the second indication information indicates that the second period includes five slots; if slot #0 is a time unit of the first type, the base station may determine slot #0 as the first time unit for transmitting PUCCH #1; or if slot #0 is a time unit of the second type, the base station may determine slot #0 as the first time unit for transmitting PUCCH #2.

If the slot #4 is a time unit of the first type, the base station determines the slot #4 as the first time unit for transmitting the PUCCH #1, and if the slot #4 is a time unit of the second type, the base station does not determine the slot#4 as the first time unit for transmitting the PUCCH #1.

If the slot #5 is a time unit of the second type, the base station determines the slot #5 as the first time unit for transmitting the PUCCH #2, and if slot #5 is a time unit of the first type, the base station does not determine the slot #5 as the first time unit for transmitting the PUCCH #2. And so on.

In step 505, determining, based on the resource set and a time unit type of the first time units, a resource occupied when the PUCCH is transmitted by the terminal in each of the first time units.

In an embodiment of the present disclosure, the base station determines that the resource used by the terminal in each first time unit is from the first resource set, and the base station may send, to the terminal by using DCI or an RRC message, an identifier indicating a first resource used by the terminal in the first resource set.

In a possible implementation, when the first time unit is a time unit of the first type, that is, the first time unit is a SBFD time unit, the base station may determine that the resource occupied when the PUCCH is transmitted in the first time unit includes the first resource that the base station indicates the terminal to use, and the first resource is located in the frequency-domain resource range occupied by the uplink subband in frequency-domain.

The base station may ensure, through scheduling, that the first resource is located in the frequency-domain resource range occupied by the uplink subband in frequency-domain.

In another possible implementation, when the first time unit is a time unit of the second type, that is, the first time unit is a non-SBFD time unit, the base station may determine that the resource occupied when the PUCCH is transmitted in the first time unit includes the first resource. In this case, the first resource may be located in a frequency-domain resource range occupied by the uplink BWP in frequency-domain.

In step 506, receiving the PUCCH sent by the terminal on the resource in each of the first time units.

In an embodiment of the present disclosure, the base station may receive the PUCCH transmitted by the terminal on the resource determined on each first time unit.

In the above embodiments, the transmission resources occupied when the terminal periodically transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication.

A time unit is an initial time unit for performing PUCCH.

In some optional embodiments, when configuring the resource set of the PUCCH, the base station may distinguish types of time units, that is, the base station separately configures corresponding resource sets of the PUCCH for the time unit of the first type and the time unit of the second type. Further, the base station may uniformly indicate the terminal to perform PUCCH transmission without distinguishing types of the time units.

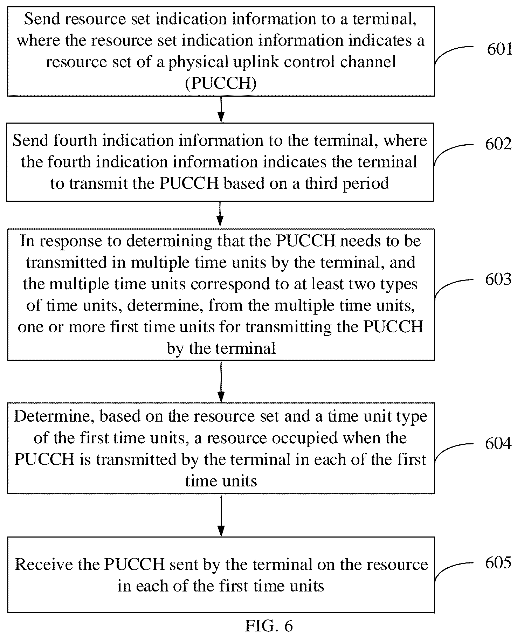

For a periodically transmitted PUCCH, referring to FIG. 6, FIG. 6 is a flowchart of a channel transmission method according to an embodiment, which may be performed by a base station, and the method may include following steps 601-605.

In step 601, sending resource set indication information to a terminal, where the resource set indication information indicates a resource set of a physical uplink control channel (PUCCH).

In an embodiment of the present disclosure, the base station may send the resource set indication information to the terminal through system information or a UE-specific RRC message, and configure the resource set of the PUCCH for the terminal through a PUCCH-ConfigCommon parameter in system information or a PUCCH-Config parameter in a RRC message.

The resource set may include: a second resource set corresponding to the first type; and a third resource set corresponding to the second type.

A number of second resources included in the second resource set may be one or more, and a number of third resources included in the third resource set may also be one or more, which is not limited in the present disclosure. The second resource may include a time-domain resource and/or a frequency-domain resource, and the third resource includes a time-domain resource and/or a frequency-domain resource.

In step 602, sending fourth indication information to the terminal, where the fourth indication information indicates the terminal to transmit the PUCCH based on a third period.

In an embodiment of the present disclosure, the base station may indicate, through the fourth indication information, the terminal to use the same third period duration to transmit the PUCCH in different types of time units.

Alternatively, the fourth indication information may be used to indicate the terminal to transmit the PUCCHs in different types of time units by using different third period durations.

The fourth indication information may also indicate a same offset for time units of different types or indicate different offsets for time units of different types, which is not limited in the present disclosure.

In step 603, in response to determining that the PUCCH needs to be transmitted in multiple time units by the terminal, and the multiple time units correspond to at least two types of time units, determining, from the multiple time units, one or more first time units for transmitting the PUCCH by the terminal.

In a possible implementation, the base station determines the first time unit based on a third period.

In this case, assuming that the third period includes four slots, the base station may use slot #0, slot #4, ..., slot #8 as the first time units.

Assuming that the third period is related to types of time units, and different third period durations corresponding to different types of time units, assuming that the third period corresponding to the time unit of the first type is a period 1 and includes four slots, and the third period corresponding to the time unit of the second type is a period 2 and includes five slots, the base station uses slot #0, slot #4, slot #8,... as the first time units based on the period 1, and the base station uses slot #0, slot #5, and slot #10 as the first time units based on the period 2.

In step 604, determining, based on the resource set and a time unit type of the first time units, a resource occupied when the PUCCH is transmitted by the terminal in each of the first time units.

In an embodiment of the present disclosure, in response to determining that the first time units are time units of the first type, the base station determines that the resource includes a second resource used by the terminal indicated by the base station through DCI or an RRC message, and in response to determining that the first time unit is a time unit of the second type, the base station determines that the resource includes a third resource used by the terminal indicated by the base station through DCI or an RRC message.

The second resource is from a second resource set, and the third resource is from a third resource set.

In step 605, receiving the PUCCH sent by the terminal on the resource in each of the first time units.

In an embodiment of the present disclosure, the base station may receive the PUCCH transmitted by the terminal on the resource determined on each first time unit.

In the above embodiment, the transmission resources occupied when the terminal periodically transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication.

In some optional embodiments, when configuring the resource set of the PUCCH, the base station may not distinguish the type of time units, that is, the base station uniformly configures the resource set of the PUCCH for time units of the first type and time units of the second type, and further, the base station may separately instruct the terminal to perform PUCCH transmission for different types of time units.

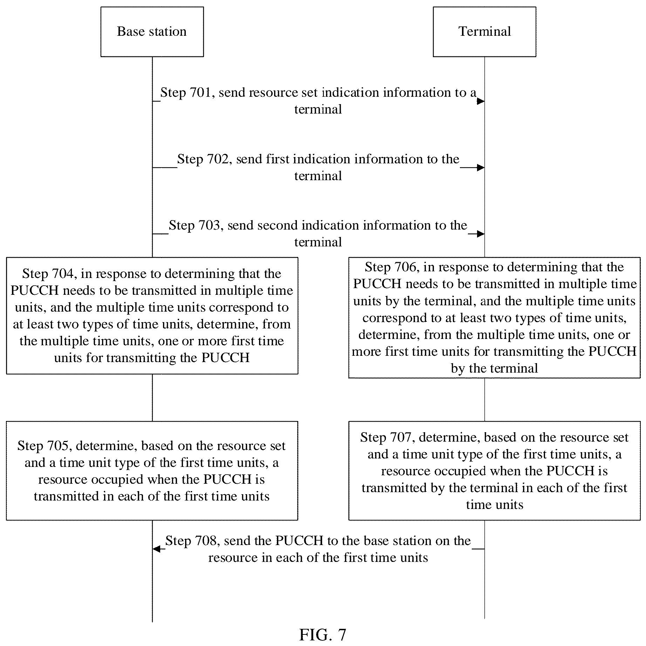

For a periodically transmitted PUCCH, referring to FIG. 7, FIG. 7 is a flowchart of a channel transmission method according to an embodiment, where the method may include following steps 701-708.

In step 701, a base station sends resource set indication information to a terminal, where the resource set indication information indicates a resource set of a physical uplink control channel (PUCCH).

An implementation of step 701 is similar to that of step 501, and details will not be repeated herein.

In step 702, the base station sends first indication information to the terminal, where the first indication information indicates the terminal to transmit the PUCCH in time units of the first type based on a first period.

An implementation of step 702 is similar to that of step 502, and details will not be repeated herein.

In step 703, the base station sends second indication information to the terminal, where the second indication information indicates the terminal to transmit the PUCCH in time units of the second type based on a second period.

An implementation of step 703 is similar to that of step 503, and details will not be repeated herein.

In step 704, in response to determining that the PUCCH needs to be transmitted in multiple time units, and the multiple time units correspond to at least two types of time units, the terminal determines, from the multiple time units, one or more first time units for transmitting the PUCCH.

An implementation of step 704 is similar to that of step 204, and details will not be repeated herein.

In step 705, the terminal determines, based on the resource set and a time unit type of the first time units, a resource occupied when the PUCCH is transmitted in each of the first time units.

An implementation of step 705 is similar to that of step 205, and details will not be repeated herein.

In step 706, in response to determining that the PUCCH needs to be transmitted in multiple time units by the terminal, and the multiple time units correspond to at least two types of time units, the terminal determines, from the multiple time units, one or more first time units for transmitting the PUCCH by the terminal.

An implementation of step 706 is similar to that of step 504, and details will not be repeated herein.

In step 707, the base station determines, based on the resource set and a time unit type of the first time units, a resource occupied when the PUCCH is transmitted by the terminal in each of the first time units.

An implementation of step 707 is similar to that of step 505, and details will not be repeated herein.

In step 708, the terminal sends the PUCCH to the base station on the resource in each of the first time units.

An implementation of step 708 is similar to that of step 206, and details will not be repeated herein.

In the above embodiment, the transmission resources occupied when the terminal periodically transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication. In some optional embodiments, when configuring the resource set of the PUCCH, the base station may not distinguish the type of time units, that is, the base station uniformly configures the resource set of the PUCCH for time units of the first type and time units of the second type, and further, the base station may separately instruct the terminal to perform PUCCH transmission for different types of time units.

In some optional embodiments, when configuring the resource set of the PUCCH, the base station may distinguish types of time units, that is, the base station separately configures corresponding resource sets of the PUCCH for the time unit of the first type and the time unit of the second type. Further, the base station may uniformly indicate the terminal to perform PUCCH transmission without distinguishing types of the time units.

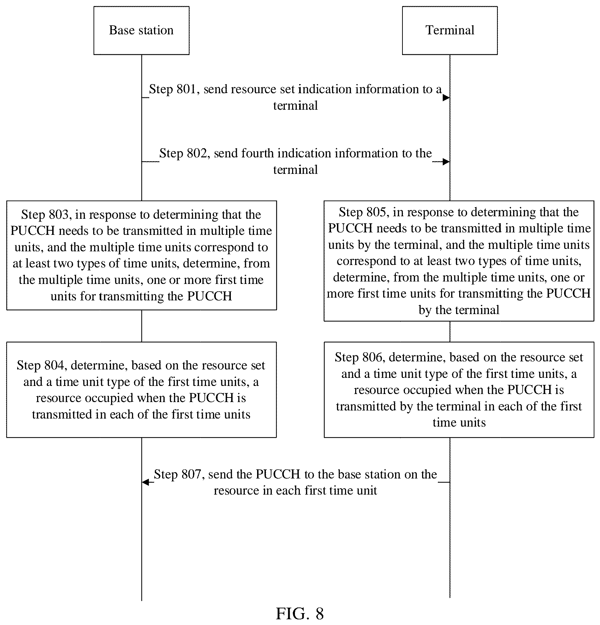

For a periodically transmitted PUCCH, referring to FIG. 8, FIG. 8 is a flowchart of a channel transmission method according to an embodiment, where the method may include following steps 801-807.

In step 801, a base station sends resource set indication information to a terminal, where the resource set indication information indicates a resource set of a physical uplink control channel (PUCCH).

An implementation of step 801 is similar to that of step 601, and details will not be repeated herein.

In step 802, the base station sends fourth indication information to the terminal, where the fourth indication information indicates the terminal to transmit the PUCCH based on a third period.

An implementation of step 802 is similar to that of step 602, and details will not be repeated herein.

In step 803, in response to determining that the PUCCH needs to be transmitted in multiple time units, and the multiple time units correspond to at least two types of time units, the terminal determines, from the multiple time units, one or more first time units for transmitting the PUCCH.

An implementation of step 803 is similar to that of step 303, and details will not be repeated herein.

In step 804, the terminal determines, based on the resource set and a time unit type of the first time units, a resource occupied when the PUCCH is transmitted in each of the first time units.

An implementation of step 804 is similar to that of step 304, and details will not be repeated herein.

In step 805, in response to determining that the PUCCH needs to be transmitted in multiple time units by the terminal, and the multiple time units correspond to at least two types of time units, the base station determines, from the multiple time units, one or more first time units for transmitting the PUCCH by the terminal.

An implementation of step 805 is similar to that of step 603, and details will not be repeated herein.

In step 806, the base station determines, based on the resource set and a time unit type of the first time units, a resource occupied when the PUCCH is transmitted by the terminal in each of the first time units.

An implementation of step 806 is similar to that of step 604, and details will not be repeated herein.

In step 807, the terminal sends the PUCCH to the base station on the resource in each first time unit.

An implementation of step 807 is similar to that of step 305, and details will not be repeated herein.

In the above embodiment, the transmission resources occupied when the terminal periodically transmits the PUCCH in different types of time units can be determined, which ensures that the terminal and the base station have same understanding of the transmission resources of the PUCCH, improves reliability of the PUCCH transmission, reduces scheduling complexity of the PUCCH transmission scheduled by the base station, effectively reduces the transmission latency, and improves reliability of full-duplex communication.

The above solution is further illustrated as follows.

Embodiment 1: it is assumed that the terminal is a terminal of a Rel-18 or a subsequent release, and has a half-duplex capability or a full-duplex capability, which is not limited in the present disclosure. It is assumed that a base station performs a full-duplex operation on a semi-static DL symbol of a time division duplexing (TDD) frequency band or a DL symbol indicated by using a slot format indication (SFI), that is, simultaneously schedules downlink data and uplink data. It should be noted that the base station may also perform a full-duplex operation on the semi-static UL symbol of the TDD frequency band or the UL symbol indicated by the SFI, that is, simultaneously schedule downlink data and uplink data. The semi-static flexible symbol is determined according to:
time division multiplexing uplink and downlink common configuration tdd-UL-DL-ConfigurationCommon sent by the base station; or
tdd-UL-DL-ConfigurationCommon and time division multiplexing uplink-downlink dedicated configuration tdd-UL-DL-ConfigurationDedicated sent by the base station.

In an embodiment, the base station indicates a transmission direction of the terminal on the DL symbol in the following two manners:
The base station configures a UL subband or a DL subband for the terminal. In the UL subband, the terminal can only perform uplink transmission; and in the DL subband, the terminal can only perform uplink reception. The base station schedules a data channel or indicates a reference signal in the UL subband or the DL subband.

Certainly, the terminal may also perform a full-duplex operation on a semi-static flexible symbol or a dynamic flexible symbol, which is not limited in the present disclosure.

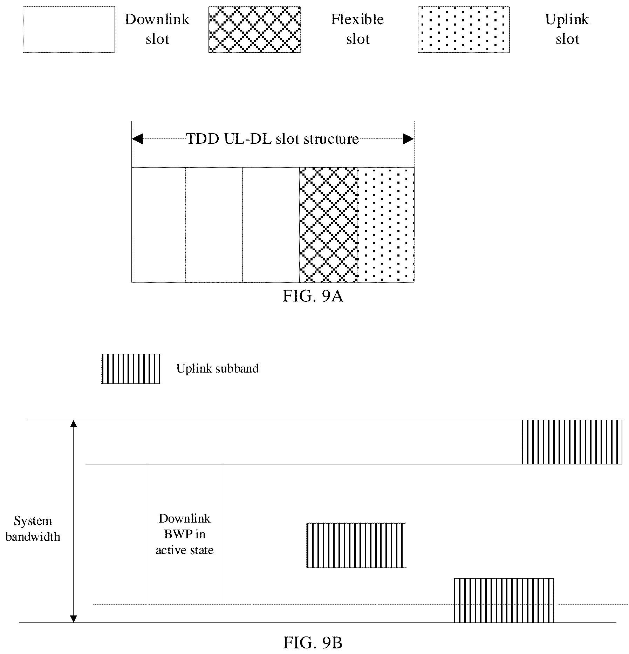

In an embodiment, it is assumed that a slot structure configured by the base station through TDD UL-DL configuration is DDDFU, that is, in the TDD configuration period, first three slots are DL slots, then one flexible slot, and a last one slot is a UL slot, as shown in FIG. 9A. Certainly, the method in this embodiment may also be directly applied to other TDD UL DL slot structures, which is not limited in the present disclosure.

The base station configures PUCCH-Config or PUCCH-Configcommon for each BWP of the terminal, to configure a time-frequency resource for transmitting a PUCCH in the BWP. In an embodiment, it is assumed that the full-duplex terminal may send uplink in the SBFD slot. The SBFD slot is configured with a UL subband or a DL subband, and in an embodiment, it is assumed that the SBFD slot is a DL slot configured with a UL subband. In the SBFD slot, the relationship between the active DL BWP and the UL subband is shown in FIG. 9B, and the resources occupied by the UL subband may be completely included in the DL BWP, or not completely included in the DL BWP, or completely not included in the DL BWP, which is not limited in this embodiment, for example, as shown in FIG. 9B.

In an embodiment, the base station configures PUCCH-Config or PUCCH-Configcommon for each BWP of the terminal through an RRC message. In other words, resource sets that can be used to transmit the PUCCH in the SBFD slot and the non-SBFD slot are the same. Corresponding to the above method in which the base station configures at least one first resource set for the terminal, the first resource set is a resource set uniformly configured for the terminal by the base station without distinguishing types of time units.

When the base station sends the first indication information and the second indication information to the terminal, and the first period and the second period indicated by the two indication information are the same, different transmission moments of the PUCCH may be located in slots of different types, that is, the SBFD slot and the non-SBFD slot.

When receiving the indication of the base station that the PUCCH needs to be sent in the SBFD slot, the terminal selects a corresponding PUCCH resource from the resource set of the PUCCH for transmission according to the indication of the base station.

In an embodiment, it is assumed that the PUCCH is a periodic PUCCH, that is, the PUCCH is transmitted in different slots according to a specific period. The terminal determines, according to an indication of the base station, time-frequency resources used for transmitting the PUCCH in the SBFD slot and the non-SBFD slot.

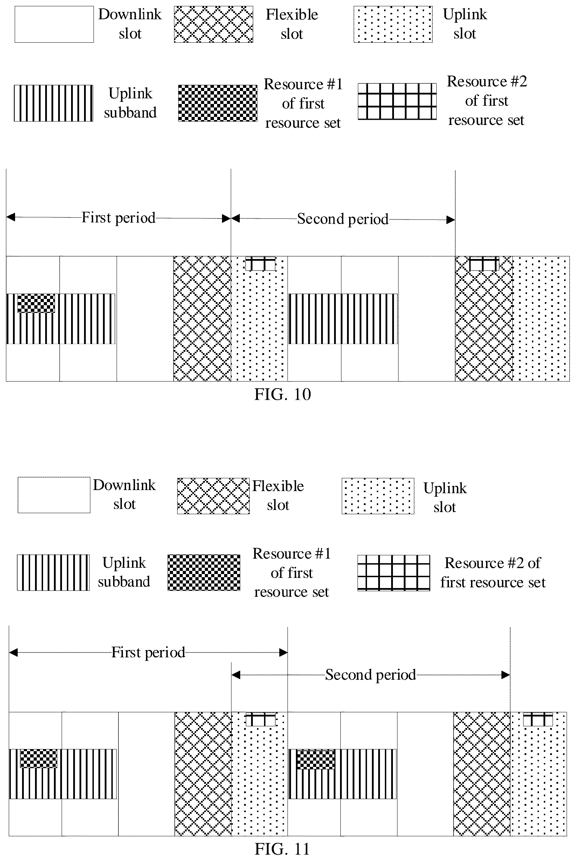

The base station uniformly configures PUCCH resource sets for two types of time units, for example, as shown in FIG. 10, including a first resource set, and frequency-domain resources included in the resource set do not exceed a frequency-domain resource range occupied by the UL subband.

Specifically, it is assumed that the base station configures UL subbands on slot #0, slot #1, slot #5, and slot #6. In addition, the first indication information indicates the terminal to transmit the PUCCH #1 in the time unit of the first type, that is, the SBFD slot based on the first period (four slots). The second indication information indicates the terminal to transmit the PUCCH #2 in the time unit of the second type, that is, the non-SBFD slot based on the second period (four slots).

As shown in FIG. 10, the terminal determines that slot #0 belongs to a slot in which PUCCH #1 and PUCCH #2 need to be sent, and because slot #0 corresponds to the first type, the base station indicates, by using DCI or an RRC message, that the identifier of the first resource used in the time unit of the first type is 1, the terminal sends PUCCH #1 on the uplink subband of slot #0 by using resource #1.

The terminal determines that the slot #4 is a slot in which the PUCCH #1 and the PUCCH #2 need to be sent, and because the slot #4 corresponds to the second type, the terminal sends the PUCCH #2 on the slot #4 by using the resource #2.

Similarly, the terminal determines that the slot #8 is a slot in which the PUCCH #1 and the PUCCH #2 need to be sent, and because the slot #8 corresponds to the second type, the terminal sends the PUCCH #2 on the slot #8 by using the resource #2.

Embodiment 2: as described in Embodiment 1, in this embodiment, it is assumed that a base station configures PUCCHs of two different periods for a terminal on each BWP, so that each periodically sent PUCCH is transmitted only in a SBFD slot or only in a non-SBFD slot. Specifically, periods and/or offsets of the two periodically transmitted PUCCHs may be the same or different. The offset herein is a number of time units between the first time unit for sending the PUCCH and a time unit whose index value is 0.

Specifically, in this embodiment, it is assumed that the base station configures the periodic transmission PUCCH #1 and the periodic transmission PUCCH #2 for the terminal. The PUCCH #1 is transmitted only in a time unit of the first type, that is, a SBFD slot, and the PUCCH #2 is transmitted only in a time unit of the second type, that is, a non-SBFD slot. As a specific example, as shown in FIG. 11. In this case, the first period indicated by the first indication information includes five slots, the offset corresponding to the PUCCH #1 is 0, the first period indicated by the second indication information includes five slots, and the offset corresponding to the PUCCH #1 is four slots.

In FIG. 11, the transmission period of the PUCCH #1 is the first period including 5 slots, and the offset value is 0, thereby ensuring that the PUCCH #1 is transmitted only in the SBFD slot. A transmission period of the PUCCH #2 includes 5 slots, and an offset of the PUCCH #2 is 4, to ensure that the PUCCH #1 is transmitted only in a UL slot. If the identifier of the first resource in the time unit of the first type indicated by the base station is 1, the terminal transmits the PUCCH in the time unit of the first type by using the resource #1 in the first resource set. If the identifier of the first resource in the time unit of the second type indicated by the base station is 2, the terminal transmits the PUCCH in the time unit of the second type by using the resource #2 in the first resource set.

Embodiment 3: it is assumed that the terminal is a terminal of a Rel-18 or a subsequent release, and has a half-duplex capability or a full-duplex capability, which is not limited in the present disclosure. It is assumed that a base station performs a full-duplex operation on a semi-static DL symbol of a time division duplexing (TDD) frequency band or a DL symbol indicated by using a slot format indication (SFI), that is, simultaneously schedules downlink data and uplink data. It should be noted that the base station may also perform a full-duplex operation on the semi-static UL symbol of the TDD frequency band or the UL symbol indicated by the SFI, that is, simultaneously schedule downlink data and uplink data. The semi-static flexible symbol is determined according to:
time division multiplexing uplink and downlink common configuration tdd-UL-DL-ConfigurationCommon sent by the base station; or
tdd-UL-DL-ConfigurationCommon and time division multiplexing uplink-downlink dedicated configuration tdd-UL-DL-ConfigurationDedicated sent by the base station.

In an embodiment, the base station indicates a transmission direction of the terminal on the DL symbol in the following two manners:
The base station configures a UL subband or a DL subband for the terminal. In the UL subband, the terminal can only perform uplink transmission; and in the DL subband, the terminal can only perform uplink reception. The base station schedules a data channel or indicates a reference signal in the UL subband or the DL subband.

Certainly, the terminal may also perform a full-duplex operation on a semi-static flexible symbol or a dynamic flexible symbol, which is not limited in the present disclosure.

In an embodiment, it is assumed that a slot structure configured by the base station through TDD UL-DL configuration is DDDFU, that is, in the TDD configuration period, first three slots are DL slots, then one flexible slot, and a last one slot is a UL slot, as shown in FIG. 9A. Certainly, the method in this embodiment may also be directly applied to other TDD UL DL slot structures, which is not limited in the present disclosure.

The base station configures PUCCH-Config or PUCCH-Configcommon for each BWP of the terminal, to configure a time-frequency resource for transmitting a PUCCH in the BWP. In an embodiment, it is assumed that the full-duplex terminal may send uplink in the SBFD slot. The SBFD slot is configured with a UL subband or a DL subband, and in an embodiment, it is assumed that the SBFD slot is a DL slot configured with a UL subband. In the SBFD slot, the relationship between the active DL BWP and the UL subband is shown in FIG. 9B, and the resources occupied by the UL subband may be completely included in the DL BWP, or not completely included in the DL BWP, or completely not included in the DL BWP, which is not limited in this embodiment, for example, as shown in FIG. 9B.

In this embodiment, the base station may configure two groups of PUCCH resource sets for the terminal through an RRC message, including a second resource set and a third resource set, which are respectively used for a SBFD slot and a non-SBFD slot. Specifically, the base station may perform configuration by using PUCCH- Config or PUCCH-configCommon, or introduce a new IE (Information Element), which is not limited in this embodiment. In conclusion, resource sets used to transmit the PUCCH in the SBFD slot and the non-SBFD slot may be same or different.

In an embodiment, the base station configures the second resource set and the third resource set for the terminal for PUCCH transmission on the SBFD slot and the non-SBFD slot, respectively. Specifically, PUCCHs transmitted periodically may have a same period or different periods.

In an example, the base station configures a single third period for the terminal, and different transmission moments of the PUCCH may be located in different types of slots, that is, a SBFD slot and a non-SBFD slot.

When receiving the indication of the base station and determining that the PUCCH needs to be sent in the SBFD slot, the terminal selects a corresponding PUCCH resource from the second resource set for transmission according to the indication of the base station. When the terminal receives the indication from the base station and determines that the PUCCH needs to be sent in the non-SBFD slot, the corresponding PUCCH resource is selected from the third resource set for transmission according to the indication from the base station.

In an embodiment, it is assumed that the PUCCH is a periodic PUCCH, that is, the PUCCH is transmitted in different slots according to a specific period. The terminal determines, according to an indication of the base station, time-frequency resources used for transmitting the PUCCH in the SBFD slot and the non-SBFD slot.

The base station may indicate the same PUCCH resource identifier for the SBFD slot and the non-SBFD slot respectively, and select the PUCCH resource in the corresponding resource set in the SBFD slot and the non- SBFD slot respectively according to the resource set identifier, so that the resource for transmitting the PUCCH does not exceed the frequency-domain resource range occupied by the UL subband.

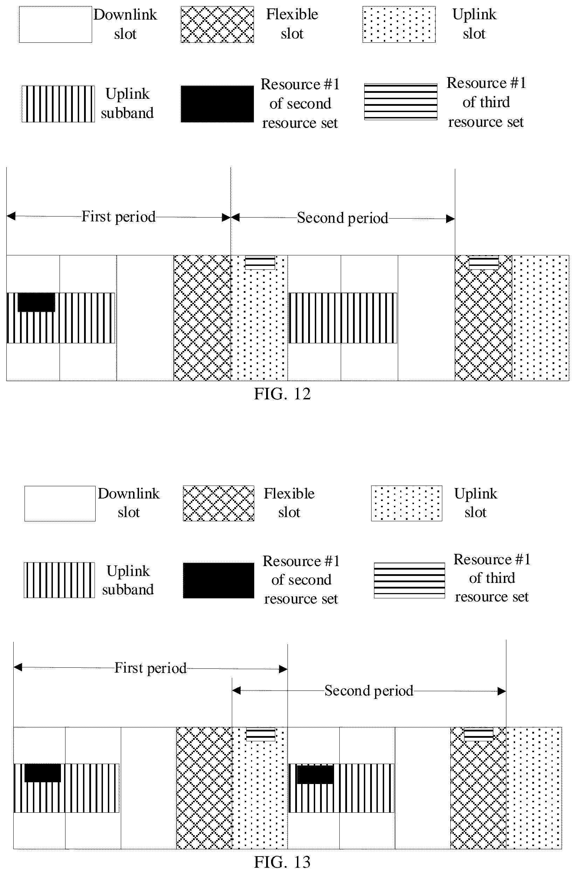

Specifically, referring to FIG. 12, it is assumed that the base station configures UL subbands on slot #0 and slot #1. In addition, the third period of the periodic PUCCH configured by the terminal includes 4 slots, and the offset is 0. In an embodiment, if the identifier of the second resource indicated by the base station for the terminal is 1, and the identifier of the third resource is also 1, the terminal performs PUCCH transmission in the SBFD slot by using the resource #1 in the second resource set, and performs PUCCH transmission in the non-SBFD slot by using the resource #1 in the third resource set.

For example, for slot #0, the slot #0 corresponds to the first type, the base station performs PUCCH transmission by using resource 1 of resource #1 in the second resource set; or for slot #4, slot #4 corresponds to the second type, the base station performs PUCCH transmission by using resource #1 in the third resource set. Similarly, in the slot #8, the slot #8 corresponds to the second type, and the base station performs PUCCH transmission by using the resource #1 in the third resource set.

Certainly, the base station may also configure or indicate different resource identifiers for PUCCHs transmitted in the SBFD slot and the non-SBFD slot, respectively, which is not limited in this embodiment.

Embodiment 6, as described in Embodiment 5, in this embodiment, it is assumed that periodic PUCCHs configured by the base station for the terminal have different periods.

In this embodiment, it is assumed that the base station configures PUCCHs of different periods for the terminal on each BWP, so that each periodically sent PUCCH is transmitted only on a SBFD slot or only on a non-SBFD slot. Specifically, the two periodically transmitted PUCCHs have different periods and/or offsets.

Specifically, as shown in FIG. 13, in this embodiment, it is assumed that the base station configures the periodic transmission PUCCH #1 and the periodic transmission PUCCH #2 for the terminal. The PUCCH #1 is transmitted only in a non-SBFD slot, and the PUCCH #2 is transmitted only in a SBFD slot.

A transmission period of the PUCCH #1 includes 5 slots, and an offset of the PUCCH #1 is 0, to ensure that the PUCCH is transmitted only in the SBFD slot; and a transmission period of the PUCCH #2 includes 5 slots, and an offset of the PUCCH #2 is 4, to ensure that the PUCCH is transmitted only in the UL slot.

Corresponding to the above embodiments of application function implementation method, the present disclosure further provides embodiments of an application function implementation apparatus.

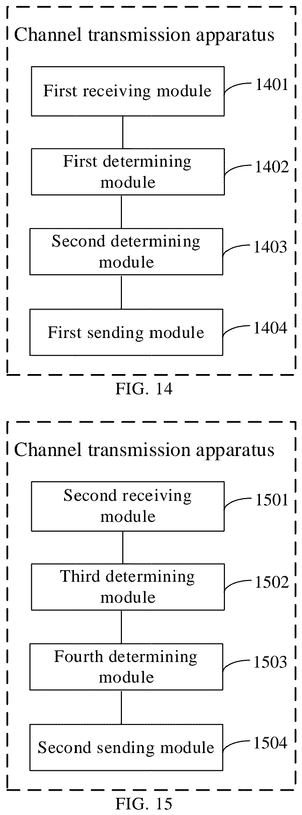

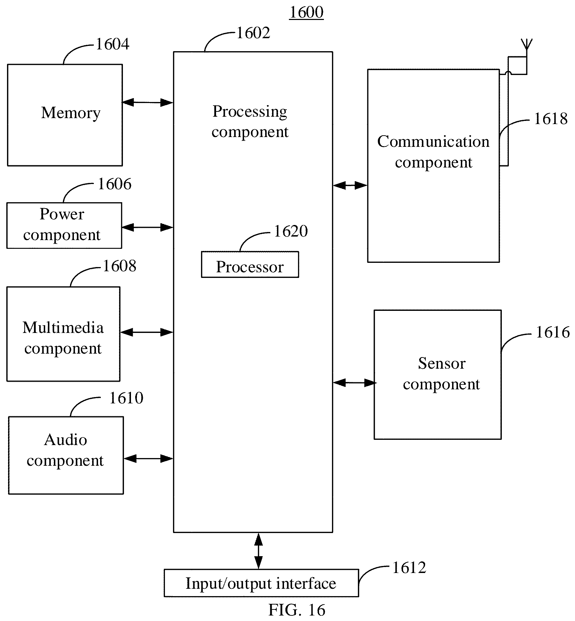

Referring to FIG. 14, FIG. 16 14 a block diagram of a channel transmission apparatus according to an example embodiment. The apparatus is applied to a terminal, and includes:
a first receiving module 1401, configured to receive resource set indication information sent by a base station, where the resource set indication information indicates a resource set of a physical uplink control channel (PUCCH);
a first determining module 1402, configured to, in response to determining that the PUCCH needs to be transmitted in multiple time units, and the multiple time units correspond to at least two types of time units, determine, from the multiple time units, one or more first time units for transmitting the PUCCH;
a second determining module 1403, configured to determine, based on the resource set and a time unit type of the first time units, a resource occupied when the PUCCH is transmitted in each of the first time units; and
a first sending module 1404, configured to send the PUCCH to the base station on the resource in each of the first time units.

Referring to FIG. 15, FIG. 15 is a block diagram of a channel transmission apparatus according to an example embodiment. The apparatus is applied to a base station, and includes:
a second sending module 1501, configured to send resource set indication information to a terminal, where the resource set indication information indicates a resource set of a physical uplink control channel (PUCCH);
a third determining module 1502, configured to, in response to determining that the PUCCH needs to be transmitted in multiple time units by the terminal, and the multiple time units correspond to at least two types of time units, determine, from the multiple time units, one or more first time units for transmitting the PUCCH by the terminal;
a fourth determining module 1503, configured to determine, based on the resource set and a time unit type of the first time units, a resource occupied when the PUCCH is transmitted by the terminal in each of the first time units; and
a second receiving module 1504, configured to receive the PUCCH sent by the terminal on the resource in each of the first time units.

For the apparatus embodiments, as they basically correspond to the method embodiments, relevant parts can be referred from the description of the method embodiments. The apparatus embodiments described above are merely illustrative, where the units described as separate components may or may not be physically separated, and the components displayed as units may or may not be physical units, that is, may be located in one place, or may be distributed on a plurality of network units. Some or all of the modules may be selected according to actual needs to achieve the objectives of the solutions of the present disclosure. A person of ordinary skill in the art may understand and implement the embodiments of the present disclosure without making creative efforts.

Correspondingly, the present disclosure further provides a computer-readable storage medium storing a computer program, where the computer program is used for performing the channel transmission method for the terminal side described above.

Correspondingly, the present disclosure further provides a computer-readable storage medium storing a computer program, where the computer program is used for performing the channel transmission method for the base station side described above.

Correspondingly, the present disclosure further provides a channel transmission device, including:
one or more processors;
a memory for storing a processor-executable instruction;
where the processor is configured to perform the channel transmission method according to any one of the above terminal side.

FIG. 16 is a block diagram of an electronic device 1600 according to an example embodiment. For example, the electronic device 1600 may be a terminal such as a mobile phone, a tablet computer, an e-book reader, a multimedia playback device, a wearable device, vehicle-mounted terminal, an iPad, or a smart television.

Referring to FIGS. 16, the electronic device 1600 may include one or more of the following components: a processing component 1602, a memory 1604, a power component 1606, a multimedia component 1608, an audio component 1610, an input/output (I/O) interface 1612, a sensor component 1616, and a communication component 1618.

The processing component 1602 typically controls overall operations of the electronic device 1600, such as the operations associated with display, telephone calls, data communications, camera operations, and recording operations. The processing component 1602 may include one or more processors 1620 to execute instructions to perform all or part of the steps in the above channel transmission method. Moreover, the processing component 1602 may include one or more modules which facilitate the interaction between the processing component 1602 and other components. For example, the processing component 1602 may include a multimedia module to facilitate the interaction between the multimedia component 1608 and the processing component 1602. For another example, the processing component 1602 may read executable instructions from the memory to implement the steps of the channel transmission method provided by the above embodiments.

The memory 1604 is configured to store various types of data to support the operation of the electronic device 1600. Examples of such data include instructions for any applications or methods operated on the electronic device 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the electronic device 1600. The power component 1606 may include a power management system, one or more power sources, and any other components associated with the generation, management, and distribution of power in the electronic device 1600.

The multimedia component 1608 includes a display screen providing an output interface between the electronic device 1600 and the user. In some embodiments, the multimedia component 1608 includes a front camera and/or a rear camera. The front camera and the rear camera may receive an external multimedia datum while the electronic device 1600 is in an operation mode, such as a photographing mode or a video mode. Each of the front camera and the rear camera may be a fixed optical lens system or have focal length and optical zoom capability.

The audio component 1610 is configured to output and/or input audio signals. For example, the audio component 1610 includes a microphone (MIC) configured to receive an external audio signal when the electronic device 1600 is in an operation mode, such as a call mode, a recording mode, and a voice recognition mode. The received audio signal may be further stored in the memory 1604 or transmitted via the communication component 1618. In some embodiments, the audio component 1610 further includes a speaker to output audio signals.

The I/O interface 1612 provides an interface between the processing component 1602 and peripheral interface modules, such as a keyboard, a click wheel, buttons, and the like. These buttons may include, but are not limited to, home buttons, volume buttons, start buttons, and lock buttons.

The sensor component 1616 includes one or more sensors to provide status assessments of various aspects of the electronic device 1600. For example, the sensor component 1616 may detect an open/closed states of the electronic device 1600, relative positioning of components, e.g., the display and the keypad, of the electronic device 1600, a change in position of the electronic device 1600 or a component of the electronic device 1600, a presence or absence of user contact with the electronic device 1600, an orientation or an acceleration/deceleration of the electronic device 1600, and a change in temperature of the electronic device 1600. The sensor component 1616 may include a proximity sensor configured to detect the presence of nearby objects without requiring any physical contact. The sensor component 1616 may also include a light sensor, such as a CMOS or CCD image sensor, for use in imaging applications. In some embodiments, the sensor component 1616 may also include an accelerometer sensor, a gyroscope sensor, a magnetic sensor, a pressure sensor, or a temperature sensor.

The communication component 1618 is configured to facilitate communication, wired or wirelessly, between the electronic device 1600 and other devices. The electronic device 1600 may access a wireless network based on a communication standard, such as Wi-F i, 2G, 3G, 4G or 5G, or a combination thereof. In an example embodiment, the communication component 1618 receives a broadcast signal or broadcast associated information from an external broadcast management system via a broadcast channel. In an example embodiment, the communication component 1618 further includes a near field communication (NFC) module to facilitate short-range communications. For example, NFC modules may be implemented based on radio frequency identification (RFID) technology, infrared data association (IrDA) technology, ultra-wideband (UWB) technology, Bluetooth (BT) technology, and other technologies.

In an example embodiment, the electronic device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above channel transmission method.

In an example embodiment, there is also provided a non-transitory machine-readable storage medium including instructions, such as included in the memory 1604, executable by the processor 1620 in the electronic device 1600, for performing the above-described channel transmission method. For example, the non-transitory computer-readable storage medium may be a ROM (read-only memory), a RAM (random access memory), CD-ROM (compact disc read-only memory), magnetic tape, floppy disk, optical data storage device, or the like.

Correspondingly, the present disclosure further provides a channel transmission device, including:
one or more processors;
a memory for storing a processor-executable instruction;
where the processor is configured to perform the channel transmission method according to any one of the above base station side.

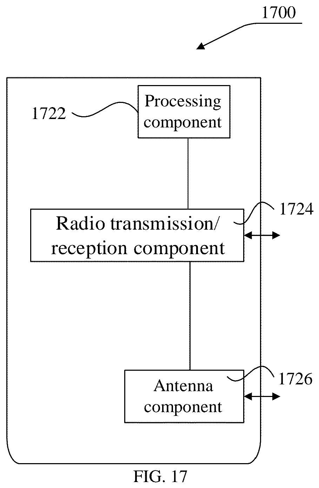

As shown in FIG. 17, FIG. 17 is a schematic structural diagram of a channel transmission device 1700 according to an example embodiment. The device 1700 may be provided as a base station. Referring to FIG. 17, the device 1700 includes a processing component 1722, a radio transmission/reception component 1724, an antenna component 1726, and a signal processing portion specific to a radio interface, and the processing component 1722 may further include at least one processor.

One of the processors in the processing component 1722 may be configured to perform any of the above channel transmission methods.

Other embodiments of the present disclosure will be apparent to those skilled in the art from consideration of the specification and practice of the present disclosure disclosed herein. The present disclosure is intended to cover any variations, uses, or adaptations of the present disclosure following the general principles thereof and including such departures from the present disclosure as come within known or customary practice in the art. It is intended that the specification and examples be considered as examples only, with a true scope and spirit of the disclosure being indicated by the following claims.

It should be understood that the present disclosure is not limited to the precise structures described above and shown in the accompanying drawings, and various modifications and changes may be made without departing from the scope thereof. The scope of the present disclosure is limited only by the appended claims.

## Claims

1. A channel transmission method, performed by a terminal, comprising:
receiving resource set indication information sent by a base station, wherein the resource set indication information indicates a resource set of a physical uplink control channel (PUCCH);
in response to determining that the PUCCH needs to be transmitted in multiple time units, and the multiple time units correspond to at least two types of time units, determining, from the multiple time units, one or more first time units for transmitting the PUCCH;
determining, based on the resource set and a time unit type of the one or more first time units, a resource occupied when the PUCCH is transmitted in each of the one or more first time units; and
sending the PUCCH to the base station on the resource in each of the one or more first time units.

2. The method according to claim 1, wherein the at least two types of time units comprise:
a first type, configured with an uplink subband, a transmission direction for the first type being downlink or flexible; and
a second type, configured with no uplink subband, a transmission direction for the second type being uplink or flexible.

3. The method according to claim 2, wherein the resource set comprises:
a first resource set configured by the base station for the terminal based on an uplink bandwidth part (BWP).

4. The method according to claim 3, wherein the method further comprises at least one of:
receiving first indication information sent by the base station, wherein the first indication information indicates the terminal to transmit the PUCCH in one or more time units of the first type based on a first period; or
receiving second indication information sent by the base station, wherein the second indication information indicates the terminal to transmit the PUCCH in one or more time units of the second type based on a second period.

5. The method according to claim 4, wherein determining, from the multiple time units, one or more first time units for transmitting the PUCCH comprises at least one of:
in response to receiving the first indication information, determining the one or more time units of the first type from the multiple time units as the one or more first time units based on the first period; or
in response to receiving the second indication information, determining the one or more time units of the second type from the multiple time units as the one or more first time units based on the second period.

6. The method according to any one of claims 3-5, wherein determining, based on the resource set and the time unit type of the one or more first time units, the resource occupied when the PUCCH is transmitted in each of the one or more first time units comprises any one of:
in response to determining that the one or more first time units are time units of the first type, determining that the resource comprises a first resource indicated by the base station to be used by the terminal, wherein the first resource is located within a frequency-domain resource range occupied by the uplink subband in frequency-domain; and
in response to determining that the one or more first time units are time units of the second type, determining that the resource comprises the first resource.

7. The method according to claim 2, wherein the resource set comprises:
a second resource set corresponding to the first type; and
a third resource set corresponding to the second type.

8. The method according to claim 7, further comprising:
receiving fourth indication information sent by the base station, wherein the fourth indication information indicates the terminal to transmit the PUCCH based on a third period.

9. The method according to claim 8, wherein determining, from the multiple time units, one or more first time units for transmitting the PUCCH comprises:
determining the one or more first time units from the multiple time units based on the third period.

10. The method according to any one of claims 7-9, wherein determining, based on the resource set and the time unit type of the one or more first time units, the resource occupied when the PUCCH is transmitted in each of the one or more first time units comprises:
in response to determining that the one or more first time units are time units of the first type, determining that the resource comprises a second resource indicated by the base station to be used by the terminal; and
in response to determining that the one or more first time units are time units of the second type, determining that the resource comprises a third resource indicated by the base station to be used by the terminal.

11. A channel transmission method, performed by a base station, comprising:
sending resource set indication information to a terminal, wherein the resource set indication information indicates a resource set of a physical uplink control channel (PUCCH);
in response to determining that the PUCCH needs to be transmitted in multiple time units by the terminal, and the multiple time units correspond to at least two types of time units, determining, from the multiple time units, one or more first time units for transmitting the PUCCH by the terminal;
determining, based on the resource set and a time unit type of the one or more first time units, a resource occupied when the PUCCH is transmitted by the terminal in each of the one or more first time units; and
receiving the PUCCH sent by the terminal on the resource in each of the one or more first time units.

12. The method according to claim 11, wherein the at least two types of time units comprise:
a first type, configured with an uplink subband, a transmission direction for the first type being downlink or flexible; and
a second type, configured with no uplink subband, a transmission direction for the second type being uplink or flexible.

13. The method according to claim 12, wherein the resource set comprises:
a first resource set configured by the base station for the terminal based on an uplink bandwidth part (BWP).

14. The method according to claim 13, wherein the method further comprises at least one of:
sending first indication information to the terminal, wherein the first indication information indicates the terminal to transmit the PUCCH in one or more time units of the first type based on a first period; or
sending second indication information to the terminal, wherein the second indication information indicates the terminal to transmit the PUCCH in one or more time units of the second type based on a second period.

15. The method according to claim 14, wherein determining, from the multiple time units, one or more one or more first time units for transmitting the PUCCH by the terminal comprises at least one of:
in response to sending the first indication information to the terminal, determining the one or more time units of the first type from the multiple time units as the one or more first time units based on the first period; or
in response to sending the second indication information to the terminal, determining the one or more time units of the second type from the multiple time units as the one or more first time units based on the second period.

16. The method according to any one of claims 13-15, wherein determining, based on the resource set and the time unit type of the one or more first time units, the resource occupied when the PUCCH is transmitted by the terminal in each of the one or more first time units comprises any one of:
in response to determining that the one or more first time units are time units of the first type, determining that the resource comprises a first resource indicated by the base station to be used by the terminal, wherein the first resource is located within a frequency-domain resource range occupied by the uplink subband in frequency-domain; and
in response to determining that the one or more first time units are time units of the second type, determining that the resource comprises the first resource.

17. The method according to claim 12, wherein the resource set comprises:
a second resource set corresponding to the first type; and
a third resource set corresponding to the second type.

18. The method according to claim 17, further comprising:
sending fourth indication information to the terminal, wherein the fourth indication information indicates the terminal to transmit the PUCCH based on a third period.

19. The method according to claim 18, wherein determining, from the multiple time units, one or more first time units for transmitting the PUCCH by the terminal comprises:
determining the one or more first time units from the multiple time units based on the third period.

20. The method according to any one of claims 17-19, wherein determining, based on the resource set and the time unit type of the one or more first time units, the resource occupied when the PUCCH is transmitted by the terminal in each of the one or more first time units comprises:
in response to determining that the one or more first time units are time units of the first type, determining that the resource comprises a second resource indicated by the base station to be used by the terminal; and
in response to determining that the one or more first time units are time units of the second type, determining that the resource comprises a third resource indicated by the base station to be used by the terminal.

21. A channel transmission apparatus, applied to a terminal, comprising:
a first receiving module, configured to receive resource set indication information sent by a base station, wherein the resource set indication information indicates a resource set of a physical uplink control channel (PUCCH);
a first determining module, configured to, in response to determining that the PUCCH needs to be transmitted in multiple time units, and the multiple time units correspond to at least two types of time units, determine, from the multiple time units, one or more first time units for transmitting the PUCCH;
a second determining module, configured to determine, based on the resource set and a time unit type of the one or more first time units, a resource occupied when the PUCCH is transmitted in each of the one or more first time units; and
a first sending module, configured to send the PUCCH to the base station on the resource in each of the one or more first time units.

22. A channel transmission apparatus, applied to a base station, comprising:
a second sending module, configured to send resource set indication information to a terminal, wherein the resource set indication information indicates a resource set of a physical uplink control channel (PUCCH);
a third determining module, configured to, in response to determining that the PUCCH needs to be transmitted in multiple time units by the terminal, and the multiple time units correspond to at least two types of time units, determine, from the multiple time units, one or more first time units for transmitting the PUCCH by the terminal;
a fourth determining module, configured to determine, based on the resource set and a time unit type of the one or more first time units, a resource occupied when the PUCCH is transmitted by the terminal in each of the one or more first time units; and
a second receiving module, configured to receive the PUCCH sent by the terminal on the resource in each of the one or more first time units.

23. A computer-readable storage medium, wherein the storage medium stores a computer program, and the computer program is used for performing the channel transmission method according to any one of claims 1-10.

24. A computer-readable storage medium, wherein the storage medium stores a computer program, and the computer program is used for performing the channel transmission method according to any one of claims 11-20.

25. A channel transmission device, comprising:
one or more processors;
a memory for storing a processor-executable instruction;
wherein the one or more processors are configured to perform the channel transmission method according to any one of claims 1-10.

26. A channel transmission device, comprising:
one or more processors;
a memory for storing a processor-executable instruction;
wherein the one or more processors are configured to perform the channel transmission method according to any one of claims 11-20.
